# EUROPÄISCHE PATENTSCHRIFT

(11) **EP 2 098 845 B1**
(45) Veröffentlichungstag und Bekanntmachung des Hinweises auf die Patenterteilung: **29.11.2017**
(21) Anmeldenummer: 08004325.0
(22) Anmeldetag: 08.03.2008
(51) Int. Cl.: G01L 9/00, G01L 19/14

(54) **Keramischer Drucksensor**
Ceramic pressure sensor
Capteur de pression en céramique

(43) Veröffentlichungstag der Anmeldung: 09.09.2009
(73) Patentinhaber: HUBA CONTROL AG, 5436 Würenlos (CH)
(72) Erfinder: Hess, Jürg, 5607 Hägglingen (CH); Grimm, Mirko, 5412 Gebenstorf (CH)
(74) Vertreter: Maier, Daniel Oliver

(56) Entgegenhaltungen:
- DE-U1- 20 300 498
- US-A- 5 436 795
- US-A1- 2004 200 291

## Beschreibung

Die Erfindung betrifft einen Drucksensor gemäss dem Oberbegriff des Patentanspruchs 1.

Drucksensoren sind allgemein bekannte Messgrössenaufnehmer zur Erfassung des Drucks in einem Medium, beispielsweise in einer Flüssigkeit oder einem Gas. Man unterscheidet dabei Drucksensoren zur Bestimmung eines Absolutdruckwertes und eines Relativdruckwertes, wobei letzterer bezüglich eines vorgegebenen Referenzdruckes gemessen wird. Häufig weisen Drucksensoren eine Messkammer auf, die von einer Membran begrenzt ist. Die Membran ist in der Lage, mittels elastischer Durchbiegung auf Druckveränderungen im an die Membran angrenzenden Medium zu reagieren. Die Durchbiegung der Membran kann durch geeignete Umsetzungsmittel, beispielsweise in Form von piezoelektrischen Widerständen oder Dehnmessstreifen, in ein elektrisches Signal umgeformt und dann einer weiteren elektronischen Verarbeitung zugeführt werden.

Ein derartige Drucksensor ist beispielsweise aus der DE 20300498 U bekannt. Der darin offenbarte Drucksensor weist einen topfförmigen Keramikkörper mit einem als eine Membran fungierenden Bodenabschnitt auf. Auf der äusseren, dem zu vermessenden Medium abgewandten Bodenseite ist die Membran mit Umsetzungsmitteln bestückt und von einer Verstärkerelektronikplatte überdeckt. Bei einer Ausbildung als Absolutdrucksensor ist der Raum zwischen der Membran und der Verstärkerelektronikplatte seitlich durch Glaslot unter Formung einer Messkammer abgedichtet.

US 2004/0200291 A1 offenbart einen Drucksensor umfassend eine erste Keramikplatte und eine erste Seite mit einem ersten Abschnitt und einem zweiten Abschnitt aufweisende zweite Keramikplatte, wobei der erste Abschnitt an die erste Keramikplatte angrenzt und der zweite Abschnitt eine Kavität mit der ersten Keramikplatte bildet. Bei einer Druckänderung an einer zweiten Seite der zweiten Keramikplatte ist die zweite Keramikplatte verformbar und die erste Keramikplatte wird im Wesentlichen nicht deformiert. Der Drucksensor umfasst weiter einen an der ersten Keramikplatte in der Kavität angeordneten ersten piezoelektrischen Widerstand, und einen an der zweiten Seite der zweiten Keramikplatte auch in der Kavität angeordneten zweiten piezoelektrischen Widerstand. Der Drucksensor umfasst ebenfalls einen mit dem ersten piezoelektrischen Widerstand verbundenen ersten Anschlusspunkt zur Aufnahme eines ersten Signals des ersten piezoelektrischen Widerstands und einen mit dem zweiten piezoelektrischen Widerstand verbundenen zweiten Anschlusspunkt zur Aufnahme eines zweiten Signals des zweiten piezoelektrischen Widerstands, wobei das erste und das zweite Signal verglichen werden, um eine Druckänderung anzugeben.

US 5,436,795 offenbart einen monolithischen kapazitiven Druckaufnehmer umfassend einen monolithischen Keramikkörper mit einer nahe an der Oberseite des Keramikkörpers ausgebildeten abgeschlossenen Kavität, wobei die Kavität eine obere Wand und einen flachen Boden aufweist, beabstandete kapazitive Platten aus Metall an der oberen Wand und an dem flachen Boden ausgebildet sind, und die kapazitiven Platten über Durchgangsleitungen an Anschlusspunkte zum Anschluss an die Steuerungselektronik angeschlossen sind.

Aufgabe der vorliegenden Erfindung ist es, einen Drucksensor bereitzustellen, der einfach und kostengünstig hergestellt werden kann.

Diese Aufgabe wird durch den Drucksensor gemäss Anspruch 1 gelöst. Weitere bevorzugte Ausführungsformen sind mit den in den abhängigen Ansprüchen angegebenen Merkmalen ausgestattet.

Die Aufgabe wird durch einen Drucksensor gelöst, der ein Trägerelement und eine Membran in Form einer Keramikplatte aufweist. Das Trägerelement und die Membran liegen in einem Überlagerungsabschnitt übereinander und begrenzen zwischen sich eine Messkammer. Die Membran ist wenigstens im Bereich der Messkammer in der Lage, sich bei einer Druckänderung eines angrenzenden Mediums elastisch zu verbiegen. Diese Verbiegung wird durch Umsetzungsmittel, die auf der vom Medium abgewandten Seite der Membran angeordnet sind, in ein elektrisches Signal umgewandelt und durch eine in den Drucksensor integrierte Verstärkerelektronik weiterverarbeitet.

Erfindungsgemäss durchgreifen die Membran und das Trägerelement ein Metallblech (20). Weiterhin seien besonders bevorzugte Ausführungsformen erwähnt, bei welchen die Membran und das Trägerelement ein wannen- oder platten- bzw. scheibenartiges Metallblech, vorzugsweise Stahlblech, durchgreifen und dabei in dem Metallblech mittels Kunststoffharz, vorzugsweise Epoxydharz, oder einer anderen Vergussmasse chemisch beständig, formschlüssig und dicht eingegossen sind. Es ist ebenso möglich, dass an das platten- bzw. scheibenartig ausgeformte Metallblech ein Elastomerring befestigt, vorzugsweise aufvulkanisiert ist. In diesem Fall werden die Membran und das Trägerelement lediglich in dem Elastomerring mittels dem oben erwähnten Kunststoffharz bzw. einer Vergussmasse dicht vergossen.

Erfindungsgemäss gliedert das Metallblech die Membran und das Trägerelement in einen die Messkammer umfassenden, bei der Druckmessung mit dem Medium in Kontakt stehbaren Messabschnitt und einen die Verstärkerelektronik umfassenden, ausserhalb des Mediums angeordneten Auswerteabschnitt. Der mit dem Metallblech ausgestattete Drucksensor kann in einer Halterung bzw. einem Gehäuse durch Verschweissen, beispielsweise mittels Laser- oder Widerstandsschweissung, Kleben, Löten oder mittels einer elastomeren Dichtung fixiert werden.

Aufgrund der einfachen Bauform des Trägerelements und der Membran ist der erfindungsgemässe Drucksensor einfach und kostengünstig herzustellen und aufgrund der Auswahl des chemisch inerten Materials Keramik für einen Einsatz in verschiedensten Medien geeignet.

In einer besonders bevorzugten Ausführungsform sind die Membran und das Trägerelement durch ein zunächst als Pulver aufgetragenes und dann bei hohen Temperaturen gesintertes Glaslot fest miteinander verbunden. Gegebenenfalls kann anstelle des Glaslots auch ein anderes Verbindungsmittel, beispielsweise Klebstoff oder ein geeignetes Dielektrikum, Verwendung finden. Eine weitere
besonders bevorzugte Ausführungsform zeichnet sich dadurch aus, dass Elemente der Verstärkerelektronik auf der dem Trägerelement zugewandten Seite der Membran angeordnet sind und dass das Trägerelement eine plattendurchgehende Ausnehmung in einem, diesen Elementen der Verstärkerelektronik gegenüberliegenden Bereich, aufweist. Auf diese Weise sind bei der Kalibrierung des Drucksensors diese Elemente von der Trägerelementseite zugänglich.

Bei einem allseitig dichten Verschluss der Messkammer fungiert der erfindungsgemässe Drucksensor als ein Absolutdrucksensor.

Weitere besonders bevorzugte Ausführungsformen sind mit den in den abhängigen Ansprüchen aufgeführten Merkmalen ausgestattet.

Nachfolgend wird eine besonders bevorzugte Ausführungsform des erfindungsgemässen Drucksensors anhand einer schematischen Zeichnung detailliert beschreiben.

Es zeigen im einzelnen:
- Fig. 1: einen Längsschnitt durch einen erfindungsgemässen Drucksensor mit einer Membran und einem Trägerelement, die als Keramikplatten ausgebildet sind, zwischen sich eine Messkammer begrenzen und durch ein mit Kunststoffharz vergossenes Metallblech hindurchgreifen;
- Fig. 2: eine Seitenansicht des Fig. 1 dargstellten Drucksensors mit der durch eine gestrichelte Linie angedeuteten Messkammer;
- Fig. 3: eine perspektivische Ansicht des in Fig. 1 und Fig. 2 gezeigten Drucksensors mit einer auf der Membran angeordneten Verstärkerelektronik;
- Fig. 4: einen vereinfachten Längsschnitt durch eine weitere Ausführungsform des erfindungsgemässen Drucksensors mit einem plattenartig ausgeformten Metallblech; und
- Fig. 5: einen weiteren vereinfachten Längsschnitt durch eine weitere Ausführungsform des erfindungsgemässen Drucksensors mit einem Metallblech, an welchem messkammerseitig ein Elastomerring aufvulkanisiert ist.

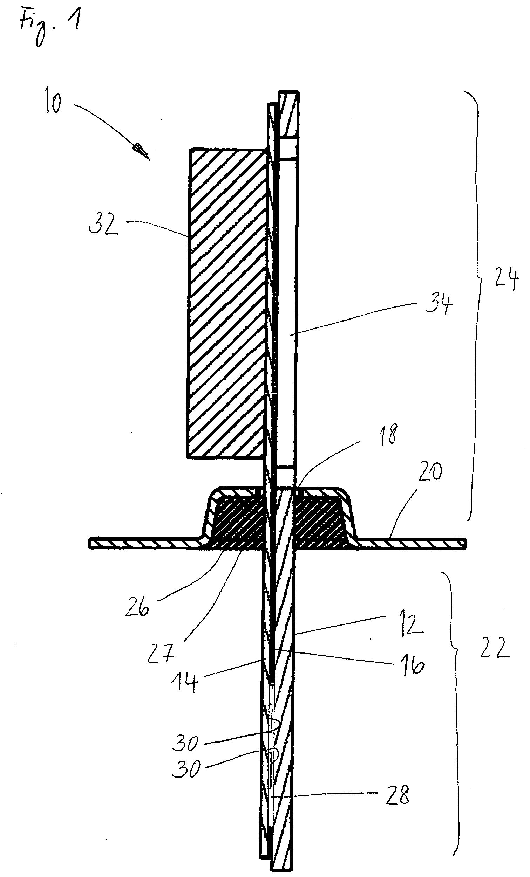

In Fig. 1 ist eine besonders bevorzugte Ausführungsform eines erfindungsgemässen Drucksensors 10 mit einem Trägerelement 12 und einer daran befestigten Membran 14 dargestellt. Das Trägerelement 12 und die Membran 14 sind aus Keramiklatten geformt, die mittels eines zwischen ihren zugewandten Flächenseiten befindlichen Verbindungsmittels 16, vorzugsweise eines Glas- oder metallischen Lots oder gegebenenfalls eines Klebstoffs oder eines geeigneten Dielektrikums, in einem Überlagerungsabschnitt sandwichartig fest miteinander verbunden sind. Für das Trägerelement 12 und die im Querschnitt deutlich dünnere Membran 14 wird eine chemisch inerte und insbesondere nicht korrodierende 96%ige Al₂O₃-Keramik verwendet. Die Aussenabmasse der Keramikplatten für das Trägerelement 12 und die Membran 14 betragen etwa 25 mm x 8 mm. Das Trägerelement 12 weist eine Dicke von etwa 0,9 mm und die Membran 14 von etwa 0,1 mm auf. Die Abmasse sind selbstverständlich den jeweiligen Gegebenheiten anpassbar.

Das Trägerelement 12 und die Membran 14 durchgreifen vorzugsweise mit einer kleinen Beabstandung eine Ausnehmung 18 eines wannenförmigen Metallblechs 20. Das Metallblech 20 umfasst das Trägerelement 12 und die Membran 14 etwa in deren Längsmitte manschettenartig und gliedert den Drucksensor 10 in einen Messabschnitt 22, der direkt oder indirekt mit einem Medium, in welchem der Druck bestimmt werden soll, in Kontakt steht, insbesondere in dieses Medium eingetaucht wird, und einen Auswerteabschnitt 24, der in eine Umgebung ausserhalb des Mediums ragt. Das Metallblech 20 ist vorzugsweise aus einem nichtrostenden Stahl, beispielsweise einem Stahl 1.4301, gefertigt und in seinem zum Medium hin geöffneten Wanneninnenraum 26 zu Dichtungszwecken mit einem Kunststoffharz 27, insbesondere einem Zweikomponenten-Epoxydharz, oder anderen Vergussmassen ausgegossen. Auf diese Weise ist eine dichte, chemisch beständige und formschlüssige Verbindung zwischen dem Trägerelement 12 und der Membran 14 sowie dem Metallblech 20 bewirkt.

Das Metallblech 20 kann durch Verschweissen, beispielsweise mittels Laser- oder Widerstandsschweissung, Löten, Kleben oder mittels einer elastomeren Dichtung in einer nicht gezeigten Halterung, die beispielsweise der Befestigung an einem Rohrelement dient, oder einem Gehäuse fixiert werden. Als Medium, in welchem der Druck bestimmt werden soll, sind insbesondere flüssige und gasförmige Stoffe vorgesehen.

Im Messabschnitt 22 ist zwischen den sich zugewandten Flächenseiten des Trägerelements 12 und der Membran 14 eine vom Verbindungsmittel 16 freie, als Messkammer 28 dienende Kavität ausgeformt. Diese Messkammer 28 ist durch die sie begrenzenden Keramikplatten 12, 14 und das Verbindungsmittel 16 dicht verschlossen und bildet auf diese Weise den gezeigten Drucksensor 10 als einen Absolutdrucksensor aus. Die Messkammer 28 ist vorzugsweise mit Luft, die unter einem spezifizierten Druck, der kleiner ist als der Atmosphärendruck der Umgebung, befüllt. Im Bereich der Messkammer 28 sind das Trägerelement 12 und die Membran 14 wenigstens nahezu eben ausgebildet. Allerdings sind Ausführungsformen möglich, bei denen zur Vergrösserung des Volumens der Messkammer 28 das Trägerelement 12 mit einer Vertiefung ausgestattet ist. Die Messkammer 28 besitzt bevorzugt eine rechteckige oder runde Grundfläche, die jedoch bei spezifische Erfordernissen auch andersartig gestaltet sein kann.

Die Membran 14 ist im Bereich der Messkammer 28 in der Lage, sich bei einer Druckänderung des sie umgebenden Mediums elastisch zu verformen. Die Verwendung von Keramikplatten für die Membran 14 ist insbesondere besonders vorteilhaft, da diese ausgezeichnete elastische Eigenschaften aufweisen ohne sich plastisch zu verformen, die elastische Verformung streng linear dem aufgebrachten Druck folgt und das Material chemisch sehr beständig ist.

Im Inneren der Messkammer 28 sind membranseitig Umsetzungsmittel 30 angebracht. Bei den Umsetzungsmitteln 30 handelt es sich um piezoresistive Widerstände oder Dehnmessstreifen. Bei einer Verformung der Membran 14 sind sie befähigt, ein elektrisches Signal in Abhängigkeit von der Stärke der Verformung zu erzeugen. Bevorzugt sind auf der medienabgewandten Seite der Membran 14 vier Umsetzungsmittel 30 in einer Wheatstonschen Brückenschaltung elektronisch miteinander verbunden und derart angeordnet, dass bei einer Verformung jeweils zwei von ihnen gedehnt und zwei gestaucht werden. Die elektrische Verschaltung in einer Wheatstonschen Brückenschaltung gewährleistet eine sehr gute Temperaturstabilität der erzeugten elektrischen Signale. Die Umsetzungsmittel 30 in Form piezoresistiver Widerstände sind vorzugsweise in einer Dickschichttechnik aufgebracht. Dabei werden sie in einem Siebdruckverfahren zunächst auf die Membran 14 aufgedruckt und anschliessend bei etwa 850°C eingebrannt. Aufgrund dieser Herstellungstechnik sind die Umsetzungsmittel 30 auch bei Betriebstemperaturen von weit über 130°C funktionstüchtig und beständig.

Die elektrischen Signale werden über nicht gezeigte elektrische Leiterbahnen, die ebenfalls auf der medienabgewandten Seite der Membran 14 geführt sind, zu einer Verstärkerelektronik 32 geleitet. Die Verstärkerelektronik 32 ist im Auswerteabschnitt 24 auf der Membran 14 angeordnet und erzeugt ein ebenfalls über elektrische Leiterbahnen zu Anschlusspunkten geführtes und dort abgreifbares Druckmesssignal. Sie weist elektronische Elemente sowohl auf der vom Trägerelement 12 abgewandten Flächseite wie auch auf der dem Trägerelement 12 zugewandten Flächseite (nicht gezeichnet) auf. Für elektrische Verbindungen zwischen den beiden Flächseiten sind entsprechende Durchkontaktierungen vorgesehen. Die Verstärkerelektronik 32 ist mit bekannten elektronischen Bauelementen zur Verstärkung des von den Umsetzungsmitteln 30 erzeugten Signals ausgestattet.

Wie Fig. 1 dargestellt, weist das Trägerelement 12 in einem der Verstärkerelektronik 32 gegenüberliegenden Bereich eine plattendurchgehende Trägerausnehmung 34 auf. Da die Membran 14 im Bereich der Trägerausnehmung 34 nicht mit Verbindungsmittel 16 bedeckt ist, erlaubt sie beispielsweise bei Kalibrationsmessungen einen Abgleich bzw. eine Modifikation der trägerplattenseitig auf der Membran 14 angeordneten elektronischen Bauelemente der Verstärkerelektronik 32.

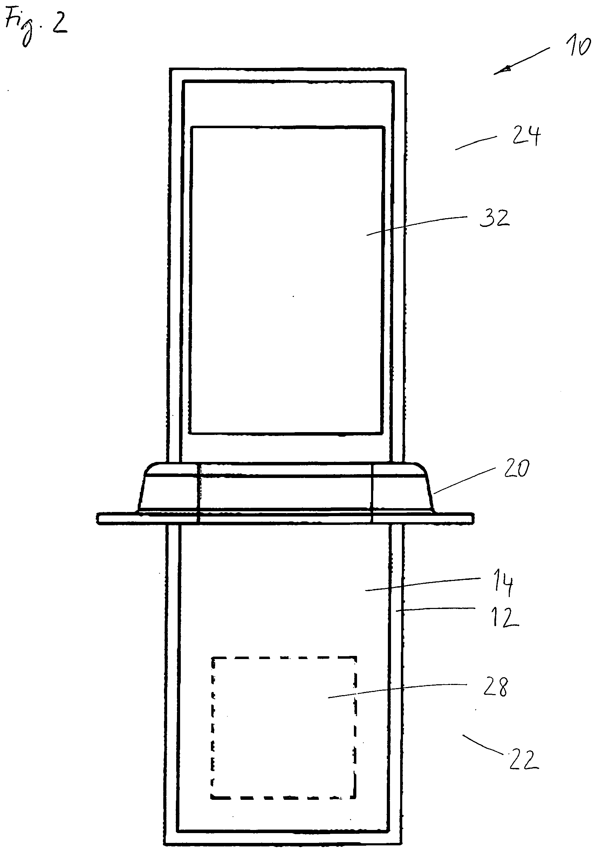

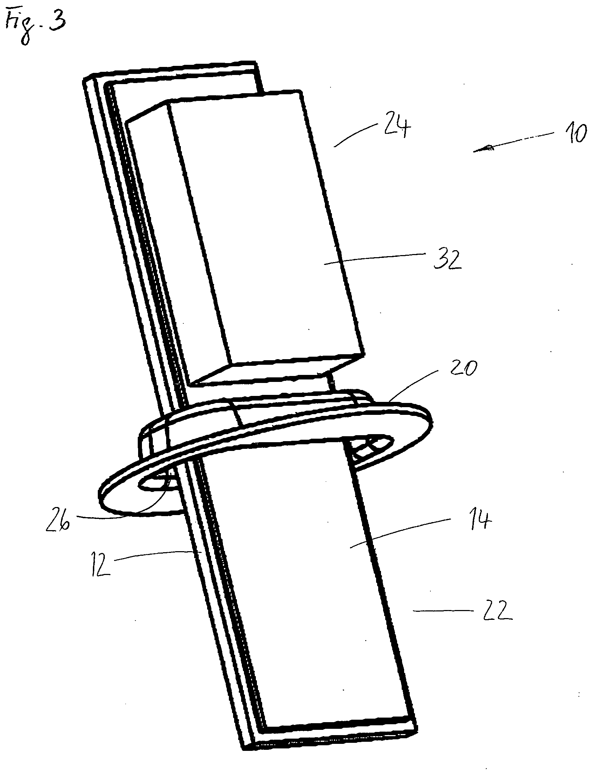

In den Figuren 2 und 3 sind weitere Ansichten des erfindungsgemässen Drucksensors 10 dargestellt. In Fig. 2 ist die Messkammer 28 durch eine gestrichelte Line angedeutet. Wie den beiden Figuren zu entnehmen ist, kann das Trägerelement 12 die Membran 14 allseitig überragen, um eine mechanische Beschädigung der dünneren Keramikplatte der Membran 14, etwa bei der Montage des Drucksensors 10, zu vermeiden.

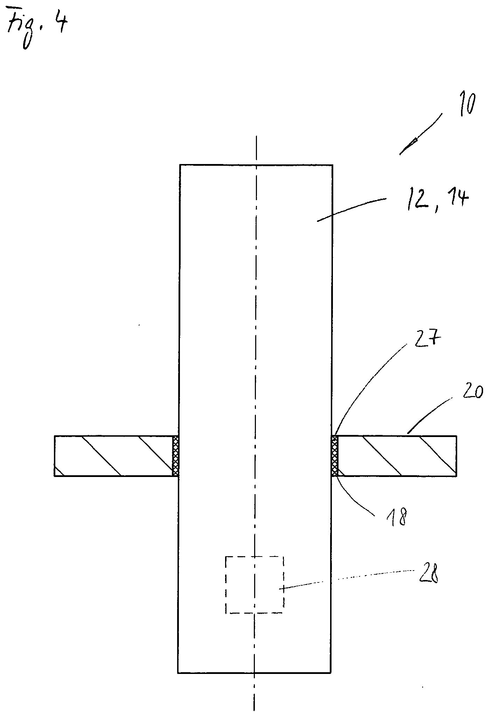

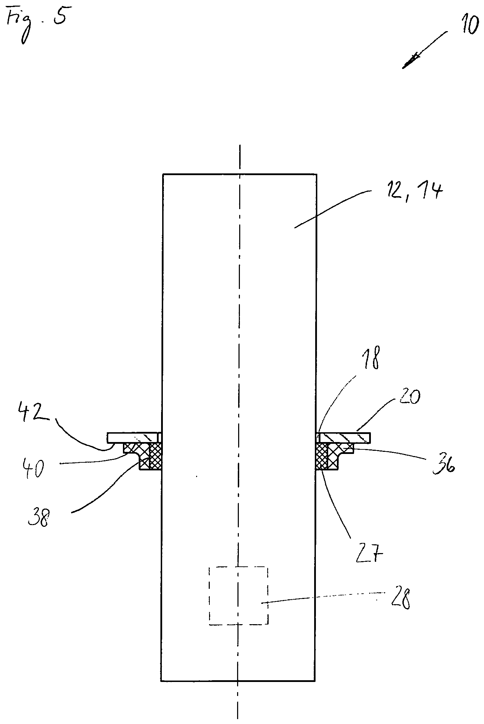

Die Figuren 4 und 5 zeigen vereinfachte Längsschnitte von weiteren bevorzugten Ausführungsformen des erfindungsgemässen Drucksensors mit verschiedenartigen Ausgestaltungen des Metallblechs 20. Die weiteren, aus Übersichtlichkeitsgründen in den Figuren nicht dargestellten Elemente entsprechen der vorgängig beschriebenen Ausführungsform.

Das in Fig. 4 gezeigte Metallblech 20 ist platten- bzw. scheibenartig ausgeformt. Die kleine Beabstandung zwischen der Ausnehmung 18 und den Keramikplatten 12, 14 ist mit Kunststoffharz 27 aufgefüllt. Die Dicke des Metallblechs 20 in dieser Ausführungsform ist vorzugsweise grösser als die des in den Figuren 1 bis 3 gezeigten Metallblechs 20.

Bei der Ausführungsform gemäss Fig. 5 ist auf dem ebenfalls platten- bzw. scheibenartig ausgeformten Metallblech 20 messkammerseitig ein Elastomerring 36 befestigt, vorzugsweise aufvulkanisiert. Der Elastomerring 36 weist vorzugsweise ein L-förmiges Profil auf und besitzt eine vorzugsweise zentral angeordnete Ringausnehmung 38. Wie bei der Ausnehmung 18 im Metallblech 20 durchgreifen auch hier das Trägerelement 12 und die Membran 14 die Ringausnehmung 38 mit einer kleinen Beabstandung. Die Beabstandung zwischen den Keramikplatten 12, 14 und der Ringausnehmung 38 ist mit Kunststoffharz 27 aufgefüllt bzw. vergossen. Die Beabstandung zwischen den Keramikplatten 12, 14 und der Ausnehmung 18 im Metallblech 20 ist dagegen vorzugsweise im Wesentlichen frei von Kunststoffharz 27.

Das Metallblech 20 erstreckt sich, wie bei der Ausführungsform gemäss Fig. 4 auch, im Wesentlichen rechtwinklig zur Längsachse der Keramikplatten 12, 14. Eine äussere Flächeseite des L-Profils des Elastomerrings 36 ist flächig einer messkammerseitigen Ansatzfläche 42 des Metallblechs 20 zugewandt. Die "Ringform" des Elastomerrings 36 ist der Form der Keramikplatten 12, 14 und des Metallblechs 20 angepasst und vorzugsweise rechteckig-abgerundet ausgebildet.

Selbstverständlich können die (Profil-)Formen, Abmasse und Materialien des Metallblechs 20, des Elastomerrings 36 und des Kunsstoffharzes 27 dem spezifischen Einsatzzweck des Drucksensors 10 angepasst sein. Wichtig ist bei allen beschriebenen Ausführungen des Metallblechs 20, dass zu Undichtigkeiten führende Risse im Kunststoffharz 27 aufgrund unterschiedlicher Wärmeausdehnungen des Kunststoffharzes 27 und der zugeordneten Elemente vermieden werden.

Neben einer Ausführung als Absolutdrucksensor ist es natürlich auch denkbar, die Messkammer 28 beispielsweise mittels eines Kanals im Trägerelement 12 mit der Umgebung oder einem externen Messkammerzusatz zu verbinden, so dass der Druck in der Messkammer 28 passiv oder aktiv eingestellt werden kann. In letzterem Fall bildet der erfindungsgemässe Drucksensor 10 einen sogenannten Relativdrucksensor.

Darüber hinaus gilt anzumerken, dass - wie oben bereits angedeutet - der Messabschnitt 22 des Drucksensors 10 nicht zwangsläufig in das Medium, von welchem der Druck zu bestimmen ist, eingetaucht sein muss, sondern gegebenenfalls auch in Kontakt zu einem Vermittlermedium, beispielsweise Luft, stehen kann. Andererseits muss der Drucksensor 10 auch nicht zwingend in einer sacklochartigen, das Medium führenden Behälterausstülpung montiert werden, so dass vorteilhafterweise Entlüftungsprobleme vermieden werden und beispielsweise eine nachfolgend beschriebene Temperaturmessung mittels eines zusätzlichen, in den Drucksensor 10 integrierten Messfühlers unterstützt wird.

Entsprechend kann der Drucksensor 10 zusätzlich mit einem nicht gezeigten Temperaturmessfühler, der beispielsweise in der Nähe der Messkammer 28 angeordnet ist, ausgestattet sein. Ein von Temperaturmessfühler erzeugtes Temperaturmesssignal wird in Analogie zum Druckmesssignal über elektrische Leiterbahnen zu Anschlusspunkten für einen Datenabgriff geführt.

## Patentansprüche

1. Drucksensor mit einem Trägerelement (12), einer Membran (14) und einer Verstärkerelektronik (32), wobei sich die eine Messkammer (28) begrenzende Membran (14) bei einer Druckbeaufschlagung durch ein Medium durchzubiegen vermag und Umsetzungsmittel (30) auf ihrer dem Medium abgewandten Seite trägt, die dazu bestimmt sind, die Durchbiegung der Membran (14) in ein auswertbares, der Verstärkerelektronik (32) zuleitbares elektrisches Signal umzusetzen, wobei das Trägerelement (12) und die Membran (14) durch Keramikplatten ausgeformt sind, die in einem Überlagerungsabschnitt mit ihren Flächenseiten übereinander liegen und dazwischen die Messkammer (28) begrenzen, **dadurch gekennzeichnet, dass** die Membran (14) und das Trägerelement (12) ein Metallblech (20) durchgreifen und das Metallblech (20) gegen die Membran (14) und das Trägerelement (12) abgedichtet ist, so dass die Membran (14) und das Trägerelement (12) in einen die Messkammer (28) umfassenden, mit dem Medium in Kontakt stehbaren Messabschnitt (22) und einen die Verstärkerelektronik (32) umfassenden, ausserhalb des Mediums anzuordnenden Auswerteabschnitt (24) gegliedert sind.

2. Drucksensor (1) nach Anspruch 1, **dadurch gekennzeichnet, dass** das Trägerelement (12) und die Membran (14) durch Verbindungsmittel (16), vorzugsweise durch Glaslot, einen Klebstoff oder ein geeignetes Dielektrikum, miteinander fest verbunden sind und das Verbindungsmittel (16) die Messkammer (28) mindestens abschnittsweise begrenzt.

3. Drucksensor (1) gemäss Anspruch 2, **dadurch gekennzeichnet, dass** das Trägerelement (12) und die Membran (14) im Bereich der Messkammer (28) im Wesentlichen eben sind.

4. Drucksensor (1) nach Anspruch 1 oder 2, **dadurch gekennzeichnet, dass** die Messkammer (28) eine Vertiefung im Trägerelement (12) umfasst.

5. Drucksensor nach einem der Ansprüche 1 bis 4, **dadurch gekennzeichnet, dass** die Messkammer (28) allseitig dicht verschlossen ist und dadurch der Drucksensor (10) als ein Absolutdrucksensor ausbildet ist.

6. Drucksensor nach einem der Ansprüche 1 bis 5, **dadurch gekennzeichnet, dass** die Verstärkerelektronik (32) auf der die Membran (14) bildenden Keramikplatte angeordnet ist.

7. Drucksensor nach Anspruch 6, dass ein Teil der Verstärkerelektronik (32) auch auf der dem Trägerelement (12) zugewandten Seite der Membran (14) angeordnet ist.

8. Drucksensor nach Anspruch 7, **dadurch gekennzeichnet, dass** das Trägerelement (12) eine plattendurchgehende Trägerausnehmung (34) in einem der Verstärkerelektronik (32) gegenüberliegenden Bereich aufweist.

9. Drucksensor nach einem der Ansprüche 1 bis 8, **dadurch gekennzeichnet, dass** das Metallblech (20) wannenartig ausgeformt ist und vorzugsweise mittels Kunststoffharz (27) gegen die Membran (14) und das Trägerelement (12) abgedichtet ist.

10. Drucksensor nach einem der Ansprüche 1 bis 8, **dadurch gekennzeichnet, dass** das Metallblech (20) platten- bzw. scheibenartig ausgeformt ist und vorzugsweise mittels Kunststoffharz (27) gegen die Membran (14) und das Trägerelement (12) abgedichtet ist.

11. Drucksensor nach einem der Ansprüche 1 bis 8, **dadurch gekennzeichnet, dass** das Metallblech (20) platten- bzw. scheibenartig ausgeformt ist und dass am Metallblech (20) auf seiner messkammerseitigen Ansatzfläche (42) ein Elastomerring (36) befestigt, vorzugsweise aufvulkanisiert ist und der Elastomerring (36) vorzugsweise mittels Kunststoffharz (27) gegen die Membran (14) und das Trägerelement (12) abgedichtet ist.

12. Drucksensor nach einem der Ansprüche 1 bis 11, **dadurch gekennzeichnet, dass** die Umsetzungsmittel (30) in einer Wheatstonschen Brückenschaltung angeordnete, vorzugsweise in einer Dickschichttechnik aufgebrachte piezoresistive Widerstände sind.

13. Drucksensor nach einem der Ansprüche 1 bis 12, **dadurch gekennzeichnet, dass** die Umsetzungsmittel (30) und die Verstärkerelektronik (32) verbindende elektrische Leiterbahnen auf der dem Trägerelement (12) zugewandten Flächenseite der Membran (14) angeordnet sind.

14. Drucksensor nach einem der Ansprüche 1 bis 13, **gekennzeichnet durch** einen integrierten Temperaturmessfühler.

## Claims

1. Pressure sensor having a carrier element (12), a diaphragm (14) and an amplifier electronics system (32), wherein the diaphragm (14), which delimits a measuring chamber (28), is able to bend when subjected to pressure by a medium and bears conversion means (30) on its side facing away from the medium that are intended to convert the bending of the diaphragm (14) into an evaluable electric signal which can be fed to the amplifier electronics system (32), wherein the carrier element (12) and the diaphragm (14) are formed by ceramic plates which have their flat sides lying over one another in an overlapping portion and delimit the measuring chamber (28) therebetween, **characterized in that** the diaphragm (14) and the carrier element (12) engage through a metal sheet (20) and the metal sheet (20) is sealed with respect to the diaphragm (14) and the carrier element (12), with the result that the diaphragm (14) and the carrier element (12) are divided into a measuring portion (22) which encompasses the measuring chamber (28) and can be in contact with the medium, and into an evaluating portion (24) which encompasses the amplifier electronics system (32) and is to be arranged outside of the medium.

2. Pressure sensor (1) according to Claim 1, **characterized in that** the carrier element (12) and the diaphragm (14) are fixedly connected to one another by connection means (16), preferably by glass solder, an adhesive or a suitable dielectric, and the connection means (16) delimits the measuring chamber (28) at least in certain portions.

3. Pressure sensor (1) according to Claim 2, **characterized in that** the carrier element (12) and the diaphragm (14) are substantially planar in the region of the measuring chamber (28).

4. Pressure sensor (1) according to Claim 1 or 2, **characterized in that** the measuring chamber (28) comprises a depression in the carrier element (12).

5. Pressure sensor according to one of Claims 1 to 4, **characterized in that** the measuring chamber (28) is closed in a sealed manner on all sides and, as a result, the pressure sensor (10) is designed as an absolute pressure sensor.

6. Pressure sensor according to one of Claims 1 to 5, **characterized in that** the amplifier electronics system (32) is arranged on the ceramic plate forming the diaphragm (14).

7. Pressure sensor according to Claim 6, that a part of the amplifier electronics system (32) is also arranged on the side of the diaphragm (14) that faces the carrier element (12).

8. Pressure sensor according to Claim 7, **characterized in that** the carrier element (12) has a plate-traversing carrier cutout (34) in a region opposite the amplifier electronics system (32).

9. Pressure sensor according to one of Claims 1 to 8, **characterized in that** the metal sheet (20) is formed in the manner of a trough and is sealed with respect to the diaphragm (14) and the carrier element (12) preferably by means of synthetic resin (27).

10. Pressure sensor according to one of Claims 1 to 8, **characterized in that** the metal sheet (20) is formed in the manner of a plate or disc and is sealed with respect to the diaphragm (14) and the carrier element (12) preferably by means of synthetic resin (27).

11. Pressure sensor according to one of Claims 1 to 8, **characterized in that** the metal sheet (20) is formed in the manner of a plate or disc, and **in that** an elastomer ring (36) is fastened, preferably vulcanized, on the metal sheet (20) on its measuring-chamber-side attachment face (42), and the elastomer ring (36) is preferably sealed with respect to the diaphragm (14) and the carrier element (12) by means of synthetic resin (27).

12. Pressure sensor according to one of Claims 1 to 11, **characterized in that** the conversion means (30) are piezoresistive resistors which are arranged in a Wheatstone bridge circuit and are preferably applied using thick film technology.

13. Pressure sensor according to one of Claims 1 to 12, **characterized in that** electrical conductor tracks connecting the conversion means (30) and the amplifier electronics system (32) are arranged on the flat side of the diaphragm (14) that faces the carrier element (12).

14. Pressure sensor according to one of Claims 1 to 13, **characterized by** an integrated temperature detector.

## Revendications

1. Capteur de pression comportant un élément de support (12), une membrane (14) et une électronique d'amplification (32), dans lequel la membrane (14), qui délimite une chambre de mesure (28), peut être infléchie lorsqu'une pression est exercée par un fluide et porte sur sa face qui est tournée à l'opposé du fluide des moyens de conversion (30) qui sont conçus pour convertir la flèche de la membrane (14) en un signal électrique pouvant être évalué et délivré à l'électronique d'amplification (32), dans lequel l'élément de support (12) et la membrane (14) sont constitués de plaques de céramique qui reposent avec leurs faces planes l'une sur l'autre dans une section de superposition et délimitent entre elles la chambre de mesure (28), **caractérisé en ce que** la membrane (14) et l'élément de support (12) s'engagent à travers une tôle métallique (20) et **en ce que** la tôle métallique (20) est rendue étanche contre la membrane (14) et l'élément de support (12) de manière à ce que la membrane (14) et l'élément de support (12) soient divisés en une section de mesure (22) comprenant la chambre de mesure (28) et pouvant être en contact avec le fluide, et en une section d'évaluation (24) comprenant l'électronique d'amplification (32) et devant être disposée à l'extérieur du fluide.

2. Capteur de pression (1) selon la revendication 1, **caractérisé en ce que** l'élément de support (12) et la membrane (14) sont fermement reliés par des moyens de liaison (16), de préférence par soudure au verre, par un adhésif ou par un diélectrique approprié et **en ce que** le moyen de liaison (16) délimite au moins par endroits la chambre de mesure (28).

3. Capteur de pression (1) selon la revendication 2, **caractérisé en ce que** l'élément de support (12) et la membrane (14) sont sensiblement plans dans la zone de la chambre de mesure (28).

4. Capteur de pression (1) selon la revendication 1 ou 2, **caractérisé en ce que** la chambre de mesure (28) comprend un renfoncement dans l'élément de support (12).

5. Capteur de pression selon l'une quelconque des revendications 1 à 4, **caractérisé en ce que** la chambre de mesure (28) est fermée de manière hermétique sur tous ses côtés et de ce fait le capteur de pression (10) est réalisé sous la forme d'un capteur de pression absolue.

6. Capteur de pression selon l'une quelconque des revendications 1 à 5, **caractérisé en ce que** l'électronique d'amplification (32) est disposée sur la plaque de céramique formant la membrane (14).

7. Capteur de pression selon la revendication 6, **caractérisé en ce qu'**une partie de l'électronique d'amplification (32) est également disposée sur la face de la membrane (14) qui est en face de l'élément de support (12).

8. Capteur de pression selon la revendication 7, **caractérisé en ce que** l'élément de support (12) comporte dans une zone opposée à l'électronique d'amplification (32) un évidement de support (34) traversant la plaque.

9. Capteur de pression selon l'une quelconque des revendications 1 à 8, **caractérisé en ce que** la tôle métallique (20) est réalisée sous la forme d'une cuve et est rendue étanche contre la membrane (14) et l'élément de support (12) de préférence au moyen d'une résine de matière plastique (27).

10. Capteur de pression selon l'une quelconque des revendications 1 à 8, **caractérisé en ce que** la tôle métallique (20) est réalisée sous la forme de plaque ou de disque et **en ce qu'**elle est rendue étanche contre la membrane (14) et l'élément de support (12) de préférence au moyen d'une résine de matière plastique (27).

11. Capteur de pression selon l'une quelconque des revendications 1 à 8, **caractérisé en ce que** la tôle métallique (20) est réalisée sous la forme de plaque ou de disque et **en ce qu'**une bague en élastomère (36) est fixée à la tôle métallique (20), de préférence vulcanisée sur celle-ci, sur sa surface d'appui (42) côté chambre de mesure et la bague en élastomère (36) est rendue étanche contre la membrane (14) et l'élément de support (12) de préférence au moyen d'une résine de matière plastique (27).

12. Capteur de pression selon l'une quelconque des revendications 1 à 11, **caractérisé en ce que** les moyens de conversion (30) sont des résistances piézorésistives disposées sous la forme d'un circuit en pont de Wheatstone, de préférence par une technique de couches épaisses.

13. Capteur de pression selon l'une quelconque des revendications 1 à 12, **caractérisé en ce que** des pistes conductrices électriques connectant les moyens de conversion (30) et l'électronique d'amplification (32) sont disposées sur la face plane de la membrane (14) qui est en face de l'élément de support (12).

14. Capteur de pression selon l'une quelconque des revendications 1 à 13, **caractérisé par** une sonde de température intégrée.
